# EUROPEAN PATENT SPECIFICATION

(11) **EP 3 131 195 B1**
(45) Date of publication and mention of the grant of the patent: **06.05.2020**
(21) Application number: 15776720.3
(22) Date of filing: 09.04.2015
(51) Int. Cl.: H02N 1/04

(54) **TRIBOELECTRIC NANOGENERATOR HARVESTING LIQUID MECHANICAL ENERGY AND ELECTRICITY GENERATION METHOD**
TRIBOELEKTRISCHER NANOGENERATOR ZUR GEWINNUNG VON MECHANISCHER ENERGIE AUS FLÜSSIGKEIT UND ELEKTRIZITÄTSERZEUGUNGSVERFAHREN
NANOGENERATEUR TRIBOELECTRIQUE COLLECTANT L'ENERGIE MECANIQUE D'UN LIQUIDE ET PROCEDE DE PRODUCTION D'ELECTRICITE

(30) Priority: 09.04.2014 CN 201410140195
(43) Date of publication of application: 15.02.2017
(73) Proprietor: Beijing Institute of Nanoenergy and Nanosystems, Beijing 100083 (CN)
(72) Inventor: WANG, Zhonglin, Beijing 100083 (CN); ZHU, Guang, Beijing 100083 (CN); SU, Yuanjie, Beijing 100083 (CN)
(74) Representative: Noble, Nicholas
(86) International application number: PCT/CN2015/076161
(87) International publication number: WO 2015/154693

(56) References cited:
- CN-A- 103 337 985
- CN-A- 103 368 451
- CN-A- 103 368 452
- CN-U- 201 467 006
- US-A1- 2011 050 181
- ZONG-HONG LIN ET AL: "Water-Solid Surface Contact Electrification and its Use for Harvesting Liquid-Wave Energy", ANGEWANDTE CHEMIE INTERNATIONAL EDITION, vol. 52, no. 48, 7 October 2013 (2013-10-07), pages 12545-12549, XP055432221, ISSN: 1433-7851, DOI: 10.1002/anie.201307249

## Description

### FIELD OF THE DISCLOSURE

The present disclosure relates to a triboelectric nanogenerator, and in particular, to a triboelectric nanogenerator and a method of generating electricity that can convert fluctuation or flow energy of liquid into electric energy.

### DESCRIPTION OF THE RELATED ART

Fluctuation or flow energy of liquid is ubiquitous in the environment. The main way of using fluctuation or flow energy of liquid to generate electricity at present is to provide a flexible piezoelectric material in a liquid, in particular a low-dimensional carbon nanostructure, such as carbon nanotubes and multi-layer graphene. The tape-like piezoelectric material fluctuates to generate potential under an effect of flow of a polar liquid. In existing designs, due to mechanical fatigue, this eel-like reciprocation causes difficulties for long-term operation of a device, and especially degrades the lives of the electrodes. This can be improved by restraining the material properties and ion concentration in water. However, these devices can only use the fluctuation energy of water that is in contact with the piezoelectric material, and can not take advantage of other energy that may be present in the water such as flow or fluctuation energy.

US 2011/0050181 is directed to an apparatus for supplying power includes an input port; a charge storage device for storing charge received through the input port; control circuitry configured to transfer charge from the charge storage device and to maintain a bias voltage at the input port; and an output port for delivering power from the control circuitry to a device.

Angewandte Chemie International Edition, vol. 52, no. 48, pp12545-12549 by Zong-Hong Lin, Gang Cheng, Long Lin, Sangmin Lee, and Zhong Lin Wang is directed to Water-Solid Surface Contact Electrification and its Use for Harvesting Liquid-Wave Energy.

### SUMMARY OF THE DISCLOSURE

The present disclosure is to design a new type of triboelectric nanogenerator used in a fluctuation or flowing liquid, which can convert mechanical energy collected from fluctuation or flow energy of liquid into electric energy. However, the structure of the generator can not be damaged due to the fluctuation or flow of liquid.

A triboelectric nanogenerator that can convert mechanical energy collected from fluctuation or flow energy of liquid into electric energy is provided in the present disclosure. An electricity generation component of the generator comprises two electrode layers that are separately disposed; and a friction layer covering the electricity generation component, wherein the liquid can frictionate with the friction layer by each other when flowing or fluctuating, such that the surface of the friction layer carries friction charges. The charges on the surface of the friction layer corresponding to the two electrode layers are successively shielded by ions in the liquid as the liquid flows or fluctuates, causing the electrostatic effects of the charges carried on the surface of the friction layer on the electrons in the first electrode layer different from those on the electrons in the second electrode layer, which results in a flow of induced charges between the two electrode layers. The generator with such a structure does not require a change of the devices of the generator and the devices can operate stably for a long time. The two electrode layers are covered with the friction layer such that the electricity generation component will not be in contact with the liquid in the environment where the generator are used and thus the generator can be widely used in a variety of liquid environments.

Based on the above concept, a triboelectric nanogenerator that collects mechanical energy of liquid is provided at first in the present disclosure, comprising:
an insulating substrate;
an electricity generation component that consists of a first electrode layer and a second electrode layer, wherein the first electrode layer and the second electrode layer are separately disposed on the substrate and electrically connected to each other; and
a friction layer that covers the electricity generation component such that the first electrode layer and the second electrode layer of the electricity generation component are isolated from the liquid;
wherein the liquid frictionates with the friction layer when the liquid fluctuates or flows, such that a surface of the friction layer in contact with the liquid carries charges. The charges on the surface of the friction layer corresponding to the two electrode layers are sequentially shielded by ions in the liquid as the liquid flows or fluctuates, causing the electrostatic effects of the charges carried on the surface of the friction layer on the electrons in the first electrode layer different from those on the electrons in the second electrode layer, which results in a flow of induced charges between the first electrode layer and the second electrode layer.

Alternatively, the surface of the friction layer in contact with the liquid is provided with a microstructure layer which is made from any one of nanowires, nanotubes, nanoparticles, nanorods, nanoflowers, nanogrooves, micron grooves, nanotapers, micron tapers, nanospheres or micron spherical structure, or an array of the above structures.

Alternatively, when the liquid is a polar liquid, the microstructure layer on the surface of the friction layer is a hydrophobic structure; or, when the liquid is a non-polar liquid, the microstructure layer on the surface of the friction layer is a hydrophilic structure.

Alternatively, the first electrode layer and the second electrode layer both are long strip-like in shape, and are arranged in parallel on the substrate in the length direction.

Alternatively, a ratio of length to width of the first electrode layer and/or the second electrode layer is 1: 1 to 1000: 1.

Alternatively, a width of an interval between the first electrode layer and the second electrode layer is 10nm to 5cm.

Alternatively, the friction layer is a film which has a thickness of 10nm to 2cm; and the microstructure layer has a thickness of 2nm to 200µm.

Alternatively, the surface of the friction layer in contact with the liquid is chemically modified, wherein:
material polarity of the friction layer is compared with material polarity of the liquid, and if the polarity of the friction layer is positive, a functional group that is more susceptible to donate electrons is introduced onto the surface of the friction layer; or if the polarity of the friction layer is negative, a functional group that is more susceptible to accept electrons is introduced onto the surface of the friction layer; or
the material polarity of the friction layer is compared with the material polarity of the liquid, and if the polarity of the friction layer is positive, positive charges are introduced onto the surface of the friction layer; or if the polarity of the friction layer is negative, negative charges are introduced onto the surface of the friction layer.

Alternatively, the material of the friction layer is one or more of the following materials: polytetrafluoroethylene, poly(perfluoroethylene-propylene) (FEP, copolymer of tetrafluoroethylene and hexafluoropropylene), polydimethylsiloxane (PDMS), polyimide, polydiphenyl propane carbonate, polyethylene glycol terephthalate, aniline-formaldehyde resin, polyformaldehyde, ethyl cellulose, polyamide, melamine-formaldehyde, polyethylene glycol succinate, cellulose, cellulose acetate, polyethylene glycol adipate, polydiallyl phthalate, regenerated cellulose sponge, polyurethane elastomer, styrene-propylene copolymer, styrene-acrylonitrile copolymer, styrene-butadiene copolymer, polyamide nylon 11, polyamide nylon 66, wool and fabrics thereof, silk and fabrics thereof, paper, artificial fiber, cotton and fabrics thereof, wood, hard rubber, polymethacrylate, polyvinyl alcohol, polyester, polyisobutylene, polyurethane elastomer, polyurethane flexible sponge, polyvinyl butyral, phenolic resin, chloroprene rubber, butadiene-propylene copolymer, natural rubber, polyacrylonitrile, poly(vinylidene chloride-co-acrylonitrile), polyethylene bisphenol A carbonate, polystyrene, polymethyl methacrylate, polycarbonate, liquid crystal polymer, polychloroprene, polyacrylonitrile, acetate, polybisphenol carbonate, polychloroether, polytrifluorochloroethylene, polyvinylidene chloride, polyethylene, polypropylene, polyvinyl chloride, and Parylene, including Parylene C, Parylene N, Parylene D, Parylene HT, or Parylene AF4.

Alternatively, the first electrode layer and the second electrode layer in the electricity generation component have a same shape and a same size.

Alternatively, the substrate, the electricity generation component and/or the friction layer are made of a rigid or flexible material.

Alternatively, the liquid is water, deionized water, sea water, aqueous NaCl solution, formic acid, methanol, ethanol, n-propanol, isopropanol, n-butanol, acetic acid, dimethyl sulfoxide, dimethyl formamide, acetonitrile, acetone, hexane, benzene, toluene, diethyl ether, chloroform, ethyl acetate, tetrahydrofuran, or dichloromethane.

Alternatively, the first electrode layer and the second electrode layer of the electricity generation component form a mutual insertion arrangement. Each of the electrodes in the mutual insertion arrangement is formed by arranging several long strip-like sub-electrodes in parallel and connecting them to each other at one end thereof. There is an interval between the first electrode layer and the second electrode layer in the mutual insertion arrangement and the first electrode layer and the second electrode layer are alternately arranged.

Alternatively, a ratio of length to width of the long strip-like sub-electrodes is 1: 1 to 1000: 1.

Alternatively, a width of the interval between the first electrode layer and the second electrode layer is 10nm-5cm.

Alternatively, the generator comprises a plurality of electricity generation components, wherein the plurality of electricity generation components are arranged sequentially in a direction of fluctuation or flow of the liquid and two adjacent electricity generation components share one electrode layer therebetween.

Alternatively, the generator further comprises a plurality of rectifying devices of which the number is the same as that of the electricity generation components, wherein the two electrode layers of each electricity generation component are connected to one of the rectifying devices.

Alternatively, output ends of all of the rectifying devices are connected in parallel to form an output end of the generator.

Alternatively, the rectifying devices are bridge rectifiers.

Accordingly, a method of generating electricity by collecting mechanical energy of liquid by means of a generator described above is further provided in the present disclosure, wherein the fluctuating or flowing liquid and the friction layer of the generator frictionate with each other such that the surface of the friction layer carries charges. The charges on the surface of the friction layer corresponding to the two electrode layers of the electricity generation component are successively shielded by ions in the liquid as the liquid flows or fluctuates, causing the electrostatic effects of the charges carried on the surface of the friction layer on the electrons in the first electrode layer different from those on the electrons in the second electrode layer, which results in a flow of charges between the first electrode layer and the second electrode layer through an outer circuit.

The generator in the present disclosure provides characteristics of low weight, small size, simple structure, low cost and convenience for scale production and installation, and can be arranged in a wide area so as to be used in an environment of ponds, rivers or coasts, to collect mechanical energy such as fluctuation or flow energy of water stream.

### BRIEF DESCRIPTION OF THE DRAWINGS

The above and other objects, features and advantages of the present disclosure will be more apparent with reference to the drawings. In the drawings, the similar reference numerals indicate the similar parts. The drawings are illustratively drawn and are not intended to be drawn in scale according to the actual size but to exhibit the concept of the disclosure. Further, although exemplary parameters provided herein may contain a specific value, it is not necessary for the parameters to be exactly equal to the corresponding value and the parameters may be similar to the corresponding values which are in acceptable tolerances or design constraints. Additionally, the directional terms mentioned in the following embodiments, such as "upper", "lower", "front", "rear", "left", "right" and the like, are only reference directions of the drawings. Thus, the directional terms herein are intended to illustrate rather than to limit the scope of the present disclosure.
Fig. 1 is a structurally schematic drawing of a triboelectric nanogenerator that collects mechanical energy of liquid according to the first embodiment of the present disclosure;
Figs. 2a-c are schematic drawings showing the change of the charges on the surface of the friction layer after the contact friction and separation between the friction layer of the generator and the liquid;
Figs. 3a-f are schematic drawings of the working process of a triboelectric nanogenerator that collects mechanical energy of liquid according to the present disclosure;
Figs. 4 (a) and (b) are graphs of the short circuit current and the quantity of the induced charges when a particular generator operates;
Fig. 5 is a structurally schematic drawing of a triboelectric nanogenerator according to the second embodiment of the present disclosure;
Fig. 6 is a structurally schematic drawing of a triboelectric nanogenerator according to the third embodiment of the present disclosure; and
Fig. 7 is a graph of the short circuit current when a particular generator operates.

### DETAILED DESCRIPTION OF EMBODIMENTS

The solution in the embodiment of the present disclosure will be clearly and completely described below in connection with the drawings in the embodiment of the present disclosure. It is apparent that the described embodiments are only a part of embodiments of the present disclosure rather than all of the embodiments. The other embodiments that can be obtained by an ordinary person skilled in the art without creative efforts based on the embodiments of the present disclosure will fall within the protection scope of the present disclosure.

Further, the present disclosure is described in detail in conjunction to the schematic drawings. When the embodiments of the disclosure are described in detail, the schematic drawings are illustrative for a purpose of illustration, which is not intended to limit the scope of the disclosure.

### Example One:

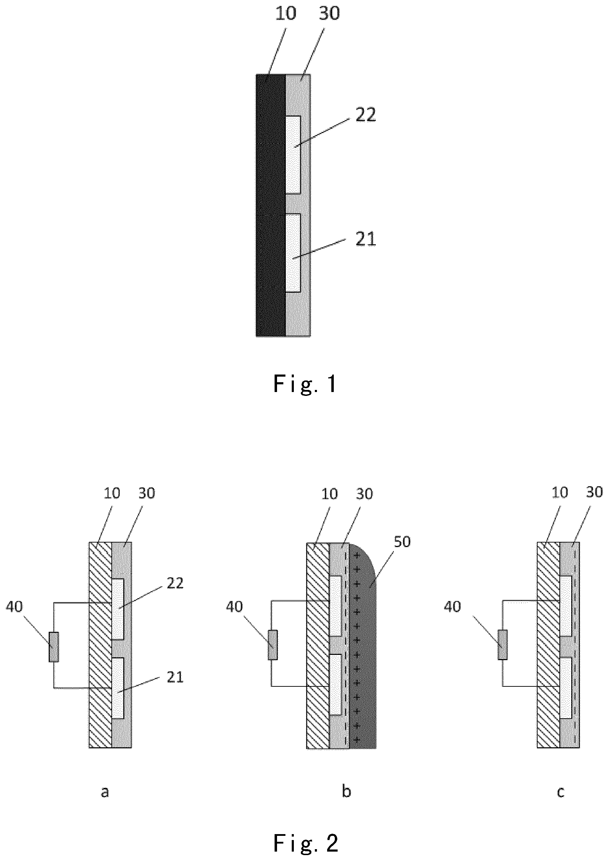

Fig. 1 is a typical structure of a triboelectric nanogenerator according to the present disclosure comprising an insulating substrate 10, an electricity generation component and a friction layer 30. The electricity generation component consists of a first electrode layer 21 and a second electrode layer 22, wherein the first electrode layer 12 and the second electrode layer 22 are separately disposed on the substrate 10 and electrically connected to each other. The friction layer 30 covers the electricity generation component such that the first electrode layer 12 and the second electrode layer 22 of the electricity generation component are isolated from the liquid environment in which the generator operates. The liquid fluctuates and frictionates with the friction layer 30 such that the surface of the friction layer 30 in contact with the liquid carries charges. The charges on the surface of the friction layer 30 corresponding to the two electrode layers are successively shielded by ions in the liquid as the liquid fluctuates, causing the electrostatic effects of the charges carried on the surface of the friction layer 30 on the electrons in the first electrode layer 21 different from those on the electrons in the second electrode layer 22, which results in a flow of induced charges between the first electrode layer 21 and the second electrode layer 22. A detection device or load 40 (as shown in Figs. 2a-c) is connected between the first electrode layer 21 and the second electrode layer 22. There may be current flowing through the detection device and load 40.

The material of the friction layer 30 may be an insulating material, preferably an organic insulator material, which can be selected from the following materials: polytetrafluoroethylene, poly(perfluoroethylene-propylene) (FEP, copolymer of tetrafluoroethylene and hexafluoropropylene), polydimethylsiloxane (PDMS), polyimide, polydiphenyl propane carbonate, polyethylene glycol terephthalate, aniline-formaldehyde resin, polyformaldehyde, ethyl cellulose, polyamide, melamine-formaldehyde, polyethylene glycol succinate, cellulose, cellulose acetate, polyethylene glycol adipate, polydiallyl phthalate, regenerated cellulose sponge, polyurethane elastomer, styrene-propylene copolymer, styrene-acrylonitrile copolymer, styrene-butadiene copolymer, polyamide nylon 11, polyamide nylon 66, wool and fabrics thereof, silk and fabrics thereof, paper, artificial fiber, cotton and fabrics thereof, wood, hard rubber, polymethacrylate, polyvinyl alcohol, polyester, polyisobutylene, polyurethane elastomer, polyurethane flexible sponge, polyvinyl butyral, phenolic resin, chloroprene rubber, butadiene-propylene copolymer, natural rubber, polyacrylonitrile, poly(vinylidene chloride-co-acrylonitrile), polyethylene bisphenol A carbonate, polystyrene, polymethyl methacrylate, polycarbonate, liquid crystal polymer, polychloroprene, polyacrylonitrile, acetate, polybisphenol carbonate, polychloroether, polytrifluorochloroethylene, polyvinylidene chloride, polyethylene, polypropylene, polyvinyl chloride, and Parylene, including Parylene C, Parylene N, Parylene D, Parylene HT, or Parylene AF4.

When the liquid fluctuates or flows and brings into contact with the outer surface of the friction layer 30, surface charges with same quantity but opposite signs are generated on the surfaces of the liquid and the friction layer 30 due to the different electron donating and accepting capability of the liquid and the friction layer 30. Taking water as an example of the liquid and a FEP film as an example of the material of the friction layer 30, as shown in Fig. 2a-c, there are no charges on the surface of FEP friction layer in the initial state (as shown in Fig. 2a), and when the water fluctuates, the water 50 frictionates with the FEP friction layer. Then the water 50 in contact with the FEP friction layer carries positive charges and the surface of FEP friction layer carries negative charges with the same quantity as the positive charges due to a triboelectric effect (as shown in Fig. 2b). After the water leaves the FEP friction layer as the water fluctuates, the negative charges on the friction layer remain (as shown in Fig. 2c). The process shown in Figs. 2b-c are repeated when the water fluctuates again and brings into contact with the FEP friction layer.

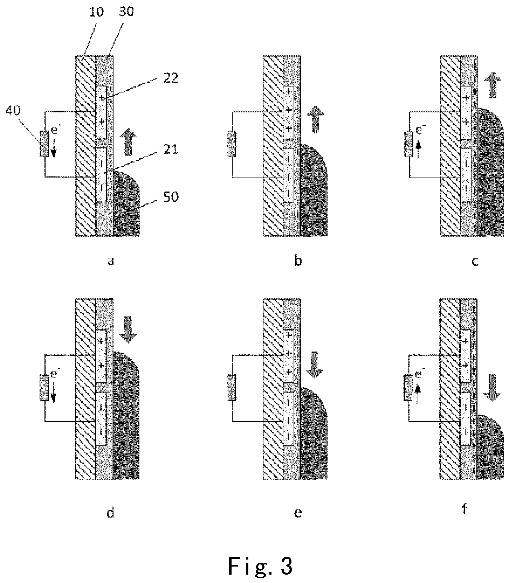

The operating principle of the generator according to the embodiment is shown in Figs. 3a-f. There is an interval between the first electrode 21 and the second electrode 22 of the electricity generation component and the two electrodes are electrically connected by a load 50. The friction layer 30 is made from FEP film, the first electrode layer 21 and the second electrode layer 22 both are Cu film, and the liquid environment is water. Two electrode layers of the electricity generation component are distributed in a up and down direction in which water fluctuates (corresponding to the up and down distribution of the two electrode layers in Figs. 3a-f). The generator generates electricity through the up and down fluctuation of the water waves on the surface of the material of friction layer 30. The electricity generation process can be divided into two processes: a first process in which the water level rises and sequentially submerges the first electrode layer 21 and the second electrode layer 22; and a second process in which the water level falls and sequentially exposes the second electrode layer 22 and the first electrode layer 21 from the water level. In the first process, the water brings into contact with the friction layer 30 such that the surface thereof carries positive charges. When the water rises and partially submerges the first electrode layer 21, the electrons in the second electrode layer 22 will be attracted to the first electrode layer 21 due to electrostatic induction, resulting in an increase of concentration of the negative charges in the first electrode layer 21. A current flows through the load 50 (as shown in Fig. 3a). When the water submerges the interval between the two electrode layers, the quantity of negative charges in the first electrode layer 21 will reach a maximum value, and there are no charges to flow through the load 50 (as shown in Fig. 3b). As the water continues to rise and partially submerges the second electrode layer 22, the electrons in the first electrode layer 21 will be attracted to the second electrode layer 22 due to the repulsion effect of the positive charges on the surface of the water wave such that the concentration of positive charges in the second electrode layer 22 reduces. Then, a current flows through the load 50 (as shown in Fig. 3c). When the surface of the second electrode layer 22 is completely submerged by the water, the positive charges in the second electrode layer 22 will be completely neutralized by electrons so that the upper and lower electrodes will not carry any charges (not shown here, and refer to the situation in Fig. 2b.). In the second process, when the water level falls from the highest level, the second electrode layer 22 is gradually exposed out of the water such that its negative charges are attracted again to the first electrode layer 21, thereby increasing the concentration of the negative charges in the lower electrode. Then a current flows through the load 50 (as shown in Fig. 3d). When the water level falls to the interval between the two electrodes, the concentration of the negative charges in the first electrode layer 21 will reach a maximum value and there is no current to flow through the load 50 (as shown in Fig. 3e). When the water continues to fall, the first electrode layer 21 begins to be gradually exposed out of the water and the negative charges will be repulsed to flow back to the second electrode layer 22 due to electrostatic induction. Then, a current flows through the load 50 (as shown in Fig. 3f). When the water level falls below the first electrode layer 21 and exposes it out of the water completely, the positive charges in the upper electrode are completely neutralized by electrons so that the two electrodes will not carry any charges. The water goes up and down, and repetitively submerges or exposes the first electrode layer 21 and the second electrode layer 22, which causes an alternating current to flow through the load 50 in the outer circuit.

It is noted that the phrase of "the water rises and partially or completely submerges the first electrode layer 21 and the second electrode layer 22" herein is not intended to indicate that the water directly contacts with and submerges the first electrode layer or the second electrode layer, but means that the friction layer corresponding to the first electrode layer or the second electrode layer (that is, the friction layer covering the first electrode layer or the second electrode layer) is submerged in the direction of fluctuation of the liquid such that part or entirety of the electrode layer is below the water level. In all the drawings for this embodiment, the direction of fluctuation of liquid such as water is a direction of up and down fluctuation. However, the generators according to all embodiments of the present disclosure can be applied in a liquid environment in which the liquid fluctuates in other directions, such as a substantially horizontal direction of fluctuation of the ocean waves in tide and ebb.

When the generator operates, the liquid fluctuates and a reciprocating sliding friction occurs between the liquid and the friction layer 30 such that the surface of the liquid and the surface of the friction layer 30 carry charges with opposite signs. The charges on the surface of the friction layer 30 corresponding to the two electrode layers are successively shielded by ions in the liquid as the liquid fluctuates and successively submerges the first electrode layer 21 and the second electrode layer 22, causing the electrostatic effects of the charges carried on the surface of the friction layer 30 on the electrons in the first electrode layer 21 different from those on the electrons in the second electrode layer 22, which results in a current in the outer circuit (as shown in Figs. 3a, c, d and e).

The friction layer 30 provides a friction surface for the triboelectric nanogenerator of the present disclosure. The selection of the material thereof is made primarily in consideration of the triboelectric property of the liquid environment where the generator will be used. In the present embodiment, in addition to the above-mentioned organic insulator materials, the material of the outer surface of the friction layer 30 may also be selected from semiconductor materials. Conventional semiconductor materials include silicon, germanium; a Group III and Group V compound, such as gallium arsenide, gallium phosphide, and the like; a Group II and Group VI compound, such as cadmium sulfide, zinc sulfide, and the like; and a solid solution consisting of a Group Ill-Group V compound and a Group II-Group VI compound, such as gallium aluminum arsenide, gallium arsenic phosphide, and the like. In addition to the above-mentioned crystalline semiconductors, amorphous glass semiconductors, organic semiconductors, and the like are possible. Non-conductive oxides, semiconductive oxides, and complex oxides, such as oxides of manganese, chromium, iron and copper, also including silicon oxide, manganese oxide, chromium oxide, iron oxides, copper oxide, zinc oxide, BiO₂ and Y₂O₃, also exhibit triboelectric characteristics, can form surface charges during friction with liquids, and thus can also be used as the friction layer of the present disclosure. Since the length of the present specification is limited, it is impossible to enumerate all applicable materials herein. Only some specific materials are listed herein, for providing reference for the readers. However, it is obvious that these specific materials may not become factors limiting the protection scope of the present disclosure, because those skilled in the art can easily select other similar materials according to the triboelectric properties possessed by these materials, under the teaching from the present disclosure.

It is found through experiments that, the larger the difference between the triboelectric properties of the materials at the surface where the friction layer 30 and the fluctuating liquid come into contact with each other, is, the stronger the electric signal output by the generator is. Therefore, it is possible to select an appropriate material, according to the actual requirements, to prepare the outer surface of the friction layer, in order to achieve a better output effect. Preferable materials exhibiting negative-polarity triboelectric property include polystyrene, polyethylene, polypropylene, polydiphenyl propane carbonate, polyethylene glycol terephthalate, polyimide, polyvinyl chloride, polydimethylsiloxane, polytrifluorochloroethylene, and polytetrafluoroethylene, and Parylene, including Parylene C, Parylene N, Parylene D, Parylene HT, or Parylene AF4; and preferable materials exhibiting positive-polarity triboelectric property include aniline-formaldehyde resin, polyformaldehyde, ethyl cellulose, polyamide nylon 11, polyamide nylon 66, wool and fabrics thereof, silk and fabrics thereof, paper, polyethylene glycol succinate, cellulose, cellulose acetate, polyethylene glycol adipate, polydiallyl phthalate, regenerated cellulose sponge, cotton and fabrics thereof, polyurethane elastomer, styrene-acrylonitrile copolymer, styrene-butadiene copolymer, wood, hard rubber, acetate, artificial fiber, polymethyl methacrylate, polyvinyl alcohol, and polyester. The friction layer is not limited to be made from only one material, but may be made from one or more of the above-mentioned materials.

The surface of the friction layer 30 can be physically modified such that the surface is provided with microstructure in order of micron or sub-micron to increase the contact area between the friction layer 30 and the fluctuating liquid, thereby increasing the quantity of contact charges carried in the liquid. This can also be achieved by means of sprinkling or coating of nanomaterials. Microstructure layer is preferably formed by nanowires, nanotubes, nanoparticles, nanorods, nanoflowers, nanogrooves, micron grooves, nanotapers, micron tapers, nanospheres, micron spherical structure or an array of the above structures, and in particular a nano array made up of nanowires, nanotubes or nanorods. The size of each of such cells in microstructure layer array is on the order of nanometers to micrometers. The size and shape of cells in a specific micro nanostructure layer are not intended to limit the scope of the present application. The microstructure layer of the outer surface of the friction layer 30 may be prepared on the surface of the friction layer by a process such as photoetching, chemical etching or plasma etching, or may be directly formed when preparing the friction layer material.

In addition to a function of further increasing the contact area between the out surface of the friction layer 30 and the liquid, the microstructure layer of the friction layer 30 can also function to adjust the hydrophobicity of the friction layer 30 so as to control the degree of separation between the friction layer and the liquid after each contact. Accordingly, it is preferable that the microstructure layer of the outer surface of the friction layer is superhydrophobic nanostructures, such as zinc oxide, polytetrafluoroethylene, polydimethylsiloxane and other nanowire array structures, in particular a superhydrophobic nanostructure layer of a lotus leaf surface or insect foot, and the like.

Further, according to the polarity of the liquid in the environment where the generator is used, the hydrophilic or hydrophobic structure of the outer surface of the friction layer 30 is selected to improve the degree of separation after the contact between the liquid and the outer surface of the friction layer such that the normal operation of the generator is ensured. Preferably, when the liquid is a polar liquid, the microstructure layer of the surface of the friction layer 30 is a hydrophobic structure; alternatively, when the liquid is a non-polar liquid, the microstructure layer of the surface of the friction layer 30 is a hydrophilic structure. The polar liquid may be water, formic acid, methanol, ethanol, n-propanol, isopropanol, n-butanol, acetic acid, dimethyl sulfoxide, dimethyl formamide, acetonitrile, acetone or the like; and a non-polar liquid may be hexane, benzene, toluene, diethyl ether, chloroform, ethyl acetate, tetrahydrofuran or dichloromethane. The performance of the generator can be further improved by adjusting the structure of the surface of the friction layer that is in contact with the liquid so that the surface has a hydrophobic structure which can increase the contact area between the friction layer and the liquid.

The surface of the friction layer 30 in contact with the liquid can also be chemically modified so as to further improve charge transfer quantity at the moment of contact, thereby increasing concentration of the contact charge and the output power of the generator. The methods of chemical modification can be divided into the following two types:
One method is to compare material polarity of the friction layer 30 with the liquid that is in contact with the friction layer 30, wherein if the polarity of the friction layer is positive, a functional group that is susceptible to donate electrons (i.e. strong electron-donating group) is introduced onto the surface of the friction layer; and if the polarity of the friction layer is negative, a functional group that is susceptible to accept electrons (i.e. strong electron-accepting group) is introduced onto the surface of the friction layer, both of which are able to further improve charge transfer quantity at the moment of contact with each other, thereby increasing the concentration of the friction charge and the output power of the generator. The strong electron-donating groups may include an amino group, a hydroxy group, an alkoxy group, and the like; and the strong electron-accepting groups may include an acyl group, a carboxyl group, a nitro group, a sulfonic acid group, and the like. The introduction of the functional groups can be carried out by using a conventional method, such as surface modification by plasma, or the like. For example, mixed gas of oxygen and nitrogen can generate plasma at a certain power, thereby introducing an amino group at the material surface of the friction layer.

Another method is to compare the material polarity of the friction layer 30 with the liquid that is in contact with the friction layer, wherein if the polarity of the friction layer is positive, positive charges are introduced onto the surface of the friction layer; and if the polarity of the friction layer is negative, negative charges are introduced onto the material surface of the friction layer. In particular, this can be achieved by way of chemical bonding. For example, the surface of PDMS friction layer can be modified with tetraethyl orthosilicate (TEOS) by a sol-gel method so as to carry negative charges. According to the electron donating and accepting capability and the type of surface chemical bond of the friction layer material, those skilled in the art can select an appropriate modifying material to bond thereto in order to achieve the object of the present disclosure, and thus such modifications fall within the scope of the present disclosure.

In addition, the output performance of the generator according to the disclosure is related to the conductivity of the liquid. A lower ion concentration assists to form surface friction charges when the liquid contacts with the friction layer mutually. In particular applications, the charge mount can be adjusted depending on different friction layer materials to increase the quantity of the surface contact charges generated when the liquid contacts with the friction layer mutually, thereby improving the output performance of the generator. For example, NaCl can be added into the water to form a saturated NaCl water solution and the quantity of the induced charges will be reduced by 40% compared to that in natural water with other conditions unchanged.

In addition to water and NaCl water solution, the liquid environment in which the generator of the present disclosure can be applied can also be deionized water, sea water, rain and the above-described polar or non-polar liquid environment.

In the present disclosure, the microstructure layer of the friction layer 30 and/or the outer surface of the friction layer is not intended to be limited to a hard material in the present disclosure, but a flexible material may be possible. This is because the hardness of the material does not affect the effect of the contact between the friction layer 30 and the liquid and those skilled in the art can choose the material according to the actual situation.

The thickness of the friction layer 30 has a significant impact on the performance of the generator of the present disclosure, but factors such as the strength of the friction layer, the hydrophobic effect and electricity generation efficiency should also be considered during preparation. The friction layer of the present disclosure is preferably a thin layer that has a thickness of 10nm to 2cm, preferably 100nm to 1cm, more preferably 1µm to 1mm. All the above thickness values are applicable in the present disclosure. The thickness of the friction layer 10 is as thin as possible, but due to the limitations of the prior art, it is most preferably 1µm to 100µm. Preferably, the thickness of the microstructure layer is between 2nm and 200µm.

The thickness of the friction layer is not particularly prescribed. However, in order to improve the output performance of the generator, the thickness of the friction layer is preferably on the order of nanometer to micrometer.

The electricity generation component in the present embodiment consists of two electrode layers. Common conductive materials can be used for the preparation of a conductive member. Such common conductive materials may for example be metal, organic conductor and conductive non-metallic material and the like, wherein the metal may be selected from gold, silver, platinum, aluminum, nickel, copper, titanium, chromium, selenium, or alloy of the above metals; and a conductive non-metallic material may be selected from indium tin oxide ITO, doped semiconductor or a conductive polymer material.

The size and shape of the two electrode layers of the electricity generation component may be the same or may be different from each other. It is found by means of experiments that reducing the width of the electrode layer can improve output performance of the generator. Preferably, either the first electrode layer or the second electrode layer is long strip-like and is arranged in parallel in the length direction. The ratio of the length to the width is 1: 1 to 1000: 1.

In the electricity generation component, the first electrode layer 21 and the second electrode layer 22 are separately disposed, that is, it is necessary to maintain a gap between the two electrode layers. The existence of the gap is a key for the electrons to flow between the two electrode layers through an outer circuit 40 such as load or a detection device. Theoretical research and experimental comparison show that the smaller the interval between the electrode layers is, the more beneficial it is to increase the current density and power density of the output. Therefore, it is preferable to maintain a small interval between electrode layers, but the interval can not be too small taking into account factor of discharging. The interval is preferably 10nm to 5cm, and more preferably 0.1µm to 1cm. The separated electrode layer may be prepared on a substrate 10 by means of selective coating technology or be directly prepared by cutting a conductive thin layer or sheet. The thickness of the two electrode layers has no impact on the performance of the generator. The two electrode layers may be films, sheets or block structures, which may be appropriately selected according to the use environment of the generator and the size of the generator.

The relative position of the first electrode layer 21 and the second electrode layer 22 is not prescribed as long as the electrode layers are alternatively arranged forward and backward or up and down in the direction of fluctuation of the liquid. The first electrode layer 21 and the second electrode layer 22 may be disposed in a same plane, be located in different planes, be parallel to each other or be formed at an angle. Preferably, the first electrode layer 21 and the second electrode layer 22 are disposed in a same plane in order to reduce the equivalent capacitance between the two electrode layers, thereby increasing the output voltage of the generator.

In order to increase the electrical signal output density while preventing a discharge between the electrode layers, a filling medium may fill the gap between the two electrode layers. The filling medium may be the same to or different from the insulating material of the friction layer. The filling medium may only fill the gap between the two electrode layers, but as shown in Figs. 1 to 3, may also be disposed around the periphery of two electrode layers as a support structure or a protection structure for the electrode layers. The filling medium may be a same material as the material of the insulating substrate.

The substrate, the electricity generation component and the friction layer of the generator may be hard materials or flexible materials. The hardness of the materials does not significantly affect the performance of electricity generation, but the application scope of the generator according to the present disclosure can be extended. The substrate material can be selected from substrate materials that is commonly used in a semiconductor device, preferably an insulating material, and more preferably organic insulator material such as acrylic plastic or the like.

Further, the generator may have a flat plate structure, a cylindrical structure and the like as a whole. For example, a cylindrical generator may be attached to a buoy, wherein the first electrode layer and the second electrode layer of the electricity generation component may be annular in shape and arranged on the buoy in a vertical direction. The first electrode layer and the second electrode layer vertically float as the vertical floating of the buoy, converting the mechanical energy of fluctuation of the liquid into electric energy. Further, the substrate of the generator may be substituted by an insulating portion on the buoy and the electricity generation component may be disposed directly on the buoy.

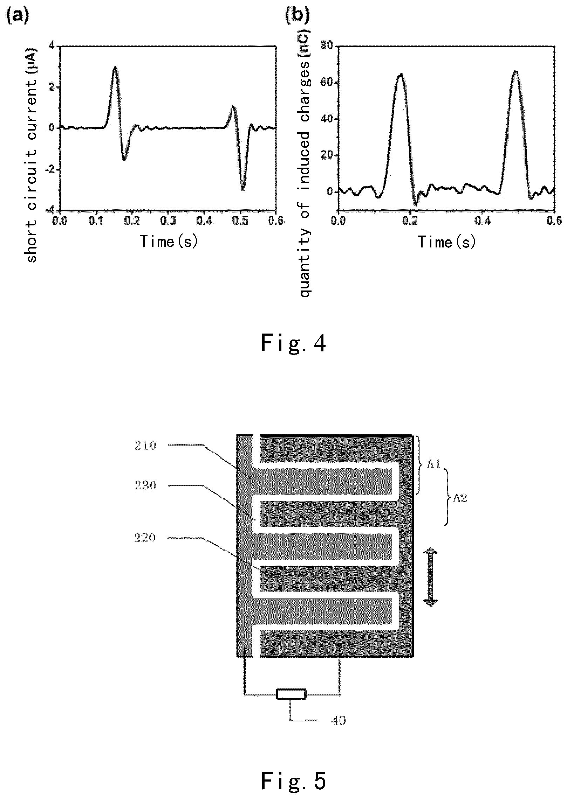

A particular generator structure is taken as an example to illustrate the output performance of the generator in fluctuating water. Two Cu films arranged in parallel are deposited on a FEP film with a thickness of 75 microns by means of a mask method. The two Cu films have a length of 6 cm and a width of 3 cm and are used as the first electrode layer and the second electrode layer. There is an interval of 1mm between the two Cu film electrode layers. The Cu films have a thickness of 200 nm. After the two electrode layers are led to outside via wires, a side of the FEP film on which the electrode layer is prepared is laminated on polyethylene terephthalate (PET) substrate. A detection device is connected to the wires led from the two electrode layers. The two electrode layers of the generator are controlled by a linear motor to be submerged into the water and rise above the water level sequentially (two processes as shown in Fig. 3). The moving speed of the generator is 0.5m/s. Figs. 4(a) and 4(b) show the short circuit current and the quantity of the induced charges between two electrode layers, and the results show that the maximum short circuit current is 3µA and the quantity of the induced charges is 75nC.

The triboelectric nanogenerator in present disclosure that collects mechanical energy, for example, in the form of fluctuation or flow energy of liquid provides advantages that it is not necessary for the two electrode layers of the electricity generation component to move as the liquid fluctuates, thereby ensuring the life of the generator. The electricity generation component is isolated from the liquid environment by the friction layer, which make it possible for the generator to be applied in any liquid environment, such as in ponds, rivers or the coast to collect the mechanical energy of the water wave. Meanwhile , the generator can also be used to collect the mechanical energy of raindrops.

The structure of the two electrode layers of the electricity generation component can be designed with a pattern such that the generator can be applied in the case of a small fluctuation of the liquid and can also be applied in the case of liquid-drop generation.

### Example Two:

In this embodiment, the two electrode layers of the electricity generation component are patterned electrode layers. Fig. 5 is another typical structure of the generator according to the embodiment. The first electrode layer 210 and the second electrode layer 220 of the electricity generation component form a mutual insertion arrangement. Each of the electrodes in the mutual insertion arrangement is formed by arranging several long strip-like sub-electrodes in parallel and connecting them to each other at one end thereof. There is an interval 230 between the first electrode layer and the second electrode layer in the mutual insertion arrangement and the first electrode layer and the second electrode layer are alternately arranged. As shown in Fig. 5, in the direction of fluctuation of the liquid indicated by the arrow, the long strip-like sub-electrodes of the two electrodes are alternately arranged. A friction layer covers the electricity generation component so that the first electrode layer 210 and the second electrode layer 220 of the electricity generation component are isolated from the liquid environment in which the generator operates. A sub-electrode of the first electrode layer 210 and a sub-electrode of the second electrode layer 220 are adjacent to each other in the direction of fluctuation of the liquid and are separated by the interval 230 therebetween to form an electricity generation sub-component A1 similar to that in Example One in structure. The generator of such a structure may be applied in an environment in which the fluid fluctuates in a wide range. The electricity generation component in the generator in this embodiment includes a plurality of electricity generation sub-components as described in Example One in structure. The plurality of electricity generation sub-components are arranged in parallel and the adjacent electricity generation sub-components share a common long strip-like sub-electrode. For example, the adjacent electricity generation sub-components A1 and A2 share a common long strip-like sub-electrode of the first electrode layer 210.

Preferably, a ratio of length to width of the long strip-like sub-electrodes in the first electrode layer or the second electrode layer in the mutual insertion arrangement is 1: 1 to 1000: 1. The width of the interval 230 between the first electrode layer 210 and the second electrode layer 220 is preferably 10nm to 5cm, and more preferably 0.1µm to 1cm.

In this embodiment, the material and structure of the substrate and the friction layer may be the same as those in Example One. The material of the first electrode layer and the second electrode layer may also be the same as those in Example One, which will not be repeated here.

### Example Three:

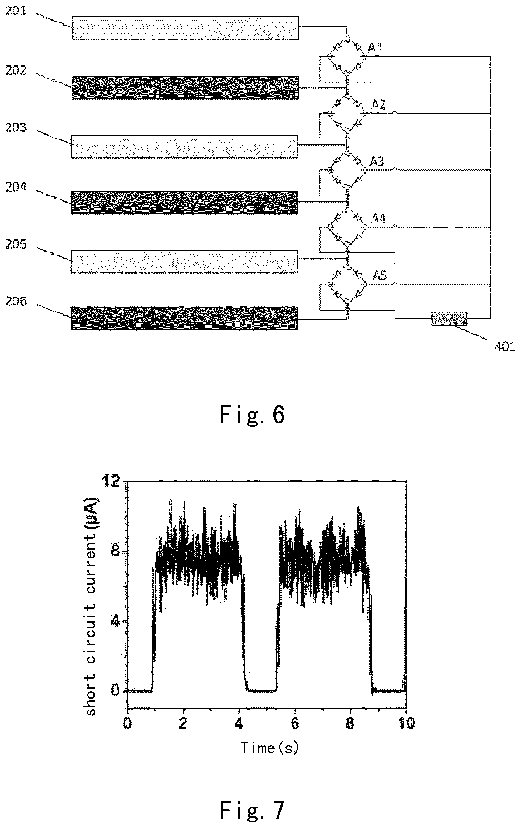

The generators in Example One and Example Two are suitable to be used in an environment with fluctuation such as ocean wave fluctuation. When the liquid fluctuates, the change of contact area of the generator with the liquid is limited, and the efficiency of absorption to mechanical energy of a flowing fluid such as rain water is restrained. In order to be suitable to be used in a liquid environment such as flowing water or raindrops, the generator provided in this embodiment comprises a plurality of electricity generation components described in Example One and a plurality of rectifying devices of which the number is the same as that of the electricity generation components. The electrode layers of the plurality of electricity generation components are arranged in parallel in a direction of flow or fluctuation of the fluid and two adjacent electricity generation components share one electrode layer therebetween. Output electrical signal of one electricity generation component is rectified by one rectifying device. All output ends of rectifying devices are connected in parallel as output end of the generator. A generator comprising five electricity generation components is taken as an example to illustrate the structure of the embodiment of this disclosure. As shown in Fig. 6, six strip-like electrode layers 201, 202, 203, 204, 205 and 206 are arranged in parallel on an insulating substrate (not shown). The electrode layers 201 and 202 of the first electricity generation component are respectively connected to the input ends of the rectifying device A1, the electrode layers 202 and 203 of the second electricity generation component are respectively connected to the input ends of the rectifying device A2, the electrode layers 203 and 204 of the third electricity generation component are respectively connected to the input ends of the rectifying device A3, the electrode layers 204 and 205 of the fourth electricity generation component are respectively connected to the input ends of the rectifying device A4 and the electrode layer 205 and 206 of the fifth electricity generation component are respectively connected to the input ends of the rectifying device A5. The output ends of the five rectifying devices A1, A2, A3, A4 and A5 are connected in parallel to form output ends of the generator. A load 401 can be connected between the output ends of the generator. The six long strip-like electrode layers 201, 202, 203, 204, 205 and 206 of the five electricity generation components are covered with a friction layer (not shown) so that the electricity generation components are isolated from the liquid environment in which they operate. A situation in which a continuous water stream flows over the friction layer of the generator is taken as an example. When the liquid sequentially flows over the friction layer covering the electrode layers 201, 202, 203, 204, 205 and 206, the liquid frictionates with the friction layer such that the friction layer and the liquid carry respective charges. The charges on the surface of the friction layer corresponding to each of the electrode layers are sequentially shielded by ions in the liquid as the liquid sequentially flows over the two electrode layers of each electricity generation component, causing the electrostatic effects of the charges carried on the surface of the friction layer on the electrons in the two corresponding electrode layers different from each other, which results in a flow of induced charges between the two corresponding electrodes. Since the directions of the generated current are opposite when the fluid flows towards and away from the electricity generation component, each of a plurality of rectifying devices is connected to one respective electricity generation component, such that the alternating current signal generated by the electricity generation component is converted into a direct current signal. When the flowing fluid or the liquid-droplet slips over the friction layer of the generator, the plurality of electricity generation components of the generator generate electrical signals at the same time or at different time. By rectifying the output signals of electricity generation components into direct current signals through the corresponding rectifying devices, respectively, and connecting them in parallel as the output signal of the generator, the mechanical energy resulting from the flowing of the fluid or the slipping of the liquid-droplet may be collected and converted into electric energy. Thus, the generator in this embodiment not only can be widely arranged in a place where flow or fluctuation of the liquid occurs, such as river or coast, but also can be applied in a liquid-droplet environment such as rain environment.

In this embodiment, it is preferable that the electrode layers of each of the electricity generation components are connected to a respective rectifying device and the output ends of the rectifying devices are connected in parallel. In other embodiments, there may be no rectifying device and a plurality of electricity generation components are connected in order so that each electricity generation component in the generator can operate independently. Each of the electricity generation components may be connected to a rectifying device, respectively, and the output signal of each electricity generation component is rectified into a direct current signal and is output independently rather than is connected in parallel.

Preferably, the width of the electrode layer of each electricity generation component is in a range of 10µm-10cm. The width of the interval between the two electrode layers is preferably in a range of 10nm-5cm, and more preferably 0.1µm-1cm.

A particular generator is taken as an example hereinafter to illustrate that the generator of the present disclosure can collect the energy of the flowing liquid to generate electricity.

An organic glass is used as a substrate. Six long strip-like Cu films arranged in parallel with equal interval which are used as electrode layers of five electricity generation components are deposited on the substrate of organic glass by means of a physical vapor deposition (PVD) method. Each of the electrode layers has a length of 20 cm, a width of 6 cm and a thickness of 200 nm. There is an interval of 1mm between two adjacent electrode layers. Macromolecule polymer material FEP that is susceptible to accept electrons is used to prepare a friction layer. The friction layer made of FEP material and having a thickness of 75 microns is adhered onto the six parallel Cu film layers. After the six parallel Cu film layers are led out by wires, epoxy is coated on edge of the friction layer such that the six electrode layers are seated by means of the friction layer and the substrate, thereby isolating the electrode layers from the liquid environment to improve the water tightness of the generator devices. And on a surface of the FEP film that will be in contact with the liquid a nanowire array in a direction perpendicular to the surface is prepared by means of a plasma etching method, improving hydrophobicity of the surface of the FEP friction layer. As shown in Fig. 5, wires led from two adjacent electrode layers (in one electricity generation component) are connected to a bridge rectifier, and output ends of the bridge rectifier 5 are connected in parallel to an ammeter. Water stream flows over the generator at an angle of 30a with respect to the friction layer of the generator. The friction layer frictionates with the water stream such that the surface of the friction layer carries charges. The charges on the surface of the friction layer corresponding to the two electrode layers are successively shielded by ions in the liquid stream, causing the electrostatic effects of the charges carried on the surface of the friction layer on the electrons in the two electrode layers different from each other. Fig. 7 illustrates a short circuit current of the generator during a period from a moment at which the water stream is approaching to the first electrode layer to a moment at which the water stream completely leaves away from the electrode layers. It can be seen that there are two electricity generation processes for the generator of which each corresponds to one interaction between the generator and the water. The short circuit current output from the generator is approximately 8µA.

The generators according to various embodiments of the disclosure are simple in structure and are able to be arranged in a wide area so as to be used in an environment of lake, coast and the like. The generators can collect mechanical energy of fluctuation or flow of the water. Further, the generator according to the disclosure may also be used in a small water area. For example, the generator may be used in a water tank in which the water fluctuates or the generator moves when the tank swings, causing a fluctuation of the water relative to the generator such that mechanical energy of fluctuation of the water is converted into electric energy.

### Example Four:

The present disclosure also provides a method of generating electricity in liquid by means of any one of the generators described above. The method will be described in connection with Fig. 1. The fluctuating or flowing liquid frictionates with the friction layer 30 of the generator such that the liquid carries charges. The charges on the surface of the friction layer corresponding to the two electrode layers of the electricity generation component are successively shielded by ions in the liquid as the liquid flows or fluctuates, causing the electrostatic effects of the charges carried on the surface of the friction layer on the electrons in the first electrode layer different from those on the electrons in the second electrode layer, which results in flow of charges between the first electrode layer 21 and the second electrode layer 22 through an outer circuit.

The method provided in the present disclosure can be applied in fluctuating liquid and can also be applied in an environment such as lakes, rivers and the like. It is convenient to convert mechanical energy in liquid in various forms into electric energy according to the method of this disclosure.

## Claims

1. A triboelectric nanogenerator that collects mechanical energy of liquid, comprising:
an insulating substrate (10);
an electricity generation component that consists of a first electrode layer (21; 210) and a second electrode layer (22; 220), wherein the first electrode layer (21; 210) and the second electrode layer (22; 220) are separately disposed on the substrate (10) and electrically connected to each other; and
a friction layer (30) that covers the electricity generation component such that the first electrode layer (21; 210) and the second electrode layer (22; 220) of the electricity generation component are isolated from the liquid,
**characterized in that**,
the triboelectric nanogenerator further comprises the liquid; and the liquid frictionates with the friction layer (30) when the liquid fluctuates or flows, such that a surface of the friction layer (30) in contact with the liquid carries charges, and
wherein the charges on the surface of the friction layer (30) corresponding to the two electrode layers are sequentially shielded by ions in the liquid as the liquid fluctuates or flows, causing the electrostatic effects of the charges carried on the surface of the friction layer (30) on the electrons in the first electrode layer (21; 210) different from those on the electrons in the second electrode layer (22; 220), which results in a flow of induced charges between the first electrode layer (21; 210) and the second electrode layer (22; 220).

2. The triboelectric nanogenerator according to claim 1,
wherein the surface of the friction layer (30) in contact with the liquid is provided with a microstructure layer which is made from any one of nanowires, nanotubes, nanoparticles, nanorods, nanoflowers, nanogrooves, micron grooves, nanotapers, micron tapers, nanospheres or micron spherical structure, or an array of the above structures.

3. The triboelectric nanogenerator according to claim 2,
wherein when the liquid is a polar liquid, the microstructure layer on the surface of the friction layer (30) is a hydrophobic structure; or when the liquid is a non-polar liquid, the microstructure layer on the surface of the friction layer (30) is a hydrophilic structure.

4. The triboelectric nanogenerator according to any one of claims 1-3,
wherein the first electrode layer (21; 210) and the second electrode layer (22; 220) both are long strip-like in shape, and are arranged in parallel on the substrate (10) in a lengthwise direction.

5. The triboelectric nanogenerator according to claim 4,
wherein a ratio of length to width of the first electrode layer (21; 210) and/or the second electrode layer (22; 220) is 1: 1 to 1000: 1.

6. The triboelectric nanogenerator according to claim 4 or 5,
wherein a width of an interval between the first electrode layer (21; 210) and the second electrode layer (22; 220) is 10nm to 5cm.

7. The triboelectric nanogenerator according to claim 2,
wherein the friction layer (30) is a film which has a thickness of 10nm to 2cm; and wherein the microstructure layer has a thickness of 2nm to 200µm.

8. The triboelectric nanogenerator according to any one of claims 1-7,
wherein the surface of the friction layer (30) in contact with the liquid is chemically modified, wherein:
comparing material polarity between the friction layer (30) and the liquid, wherein if the polarity of the friction layer (30) is positive, a functional group that is susceptible to donate electrons is introduced onto the surface of the friction layer (30); and if the polarity of the friction layer (30) is negative, a functional group that is susceptible to accept electrons is introduced onto the surface of the friction layer (30); or
comparing the material polarity between the friction layer (30) and the liquid, wherein if the polarity of the friction layer (30) is positive, positive charges are introduced onto the surface of the friction layer (30); and if the polarity of the friction layer (30) is negative, negative charges are introduced onto the surface of the friction layer (30).

9. The triboelectric nanogenerator according to any one of claims 1-8,
wherein the material of the friction layer (30) is one or more of the following materials: polytetrafluoroethylene, poly(perfluoroethylene-propylene) (FEP, copolymer of tetrafluoroethylene and hexafluoropropylene), polydimethylsiloxane (PDMS), polyimide, polydiphenyl propane carbonate, polyethylene glycol terephthalate, aniline-formaldehyde resin, polyformaldehyde, ethyl cellulose, polyamide, melamine-formaldehyde, polyethylene glycol succinate, cellulose, cellulose acetate, polyethylene glycol adipate, polydiallyl phthalate, regenerated cellulose sponge, polyurethane elastomer, styrene-propylene copolymer, styrene-acrylonitrile copolymer, styrene-butadiene copolymer, polyamide nylon 11, polyamide nylon 66, wool and fabrics thereof, silk and fabrics thereof, paper, artificial fiber, cotton and fabrics thereof, wood, hard rubber, polymethacrylate, polyvinyl alcohol, polyester, polyisobutylene, polyurethane elastomer, polyurethane flexible sponge, polyvinyl butyral, phenolic resin, chloroprene rubber, butadiene-propylene copolymer, natural rubber, polyacrylonitrile, poly(vinylidene chloride-co-acrylonitrile), polyethylene bisphenol A carbonate, polystyrene, polymethyl methacrylate, polycarbonate, liquid crystal polymer, polychloroprene, polyacrylonitrile, acetate, polybisphenol carbonate, polychloroether, polytrifluorochloroethylene, polyvinylidene chloride, polyethylene, polypropylene, polyvinyl chloride, and Parylene, including Parylene C, Parylene N, Parylene D, Parylene HT, or Parylene AF4.

10. The triboelectric nanogenerator according to any one of claims 1-9,
wherein the liquid is water, deionized water, sea water, aqueous NaCl solution, formic acid, methanol, ethanol, n-propanol, isopropanol, n-butanol, acetic acid, dimethyl sulfoxide, dimethyl formamide, acetonitrile, acetone, hexane, benzene, toluene, diethyl ether, chloroform, ethyl acetate, tetrahydrofuran, or dichloromethane.

11. The triboelectric nanogenerator according to any one of claims 1-3 and 7-10,
wherein the first electrode layer (21; 210) and the second electrode layer (22; 220) of the electricity generation component form a mutual insertion arrangement, each of the electrodes in the mutual insertion arrangement is formed by arranging a plurality of long strip-like sub-electrodes in parallel and connecting them to each other at one end thereof; and
wherein there is an interval between the first electrode layer (21; 210) and the second electrode layer (22; 220) in the mutual insertion arrangement and the first electrode layer (21; 210) and the second electrode layer (22; 220) are alternately arranged.

12. The triboelectric nanogenerator according to claim 11,
wherein ratios of length to width of the long strip-like sub-electrodes are 1: 1 to 1000: 1.

13. The triboelectric nanogenerator according to any one of claims 1-10,
wherein the generator comprises a plurality of electricity generation components, and
wherein the plurality of electricity generation components are arranged sequentially in a direction of fluctuation or flow of the liquid and two adjacent electricity generation components share one electrode layer therebetween.

14. The triboelectric nanogenerator according to claim 13,
wherein the generator further comprises a plurality of rectifying devices (A1, A2, A3, A4, A5) of which the number is the same as that of the electricity generation components, and
wherein the two electrode layers of each electricity generation component are connected to one of the rectifying devices (A1, A2, A3, A4, A5).

15. A method of generating electricity,
**characterized in that**,
the electricity is generated by collecting mechanical energy of liquid by means of a triboelectric nanogenerator according to any one of claims 1-14,
wherein the fluctuating or flowing liquid and the friction layer (30) of the generator frictionate with each other such that the surface of the friction layer (30) carries charges, and
wherein the charges on the surface of the friction layer (30) corresponding to the two electrode layers of the electricity generation component are successively shielded by ions in the liquid as the liquid fluctuates or flows, causing the electrostatic effects of the charges carried on the surface of the friction layer (30) on the electrons in the first electrode layer (21; 210) different from those on the electrons in the second electrode layer (22; 220), which results in a flow of charges between the first electrode layer (21; 210) and the second electrode layer (22; 220) through an outer circuit.

## Patentansprüche

1. Triboelektrischer Nanogenerator, der mechanische Energie von Flüssigkeit abgreift, umfassend:
ein isolierendes Substrat (10);
eine Elektrizitätserzeugungskomponente, die aus einer ersten Elektrodenschicht (21; 210) und einer zweiten Elektrodenschicht (22; 220) besteht, wobei die erste Elektrodenschicht (21; 210) und die zweite Elektrodenschicht (22; 220) separat auf dem Substrat (10) angeordnet und elektrisch miteinander verbunden sind; und eine Reibungsschicht (30), welche die Elektrizitätserzeugungskomponente derart bedeckt, dass die erste Elektrodenschicht (21; 210) und die zweite Elektrodenschicht (22; 220) der Elektrizitätserzeugungskomponente von der Flüssigkeit isoliert sind,
**dadurch gekennzeichnet, dass**
der triboelektrische Nanogenerator ferner die Flüssigkeit umfasst; und die Flüssigkeit an der Reibungsschicht (30) reibt, wenn die Flüssigkeit fluktuiert oder fließt, derart dass einer Oberfläche der Reibungsschicht (30), die mit der Flüssigkeit in Kontakt steht, Ladungen trägt, und
wobei die Ladungen auf der Oberfläche der Reibungsschicht (30), die den zwei Elektrodenschichten entspricht, nacheinander durch Ionen in der Flüssigkeit abgeschirmt werden, wenn die Flüssigkeit fluktuiert oder fließt, was bewirkt, dass die elektrostatischen Wirkungen der auf der Oberfläche der Reibungsschicht (30) getragenen Ladungen auf die Elektronen in der ersten Elektrodenschicht (21; 210) anders sind als diejenigen auf den Elektronen in der zweiten Elektrodenschicht (22; 220), was einen Fluss induzierter Ladungen zwischen der ersten Elektrodenschicht (21; 210) und der zweiten Elektrodenschicht (22; 220) zum Ergebnis hat.

2. Triboelektrischer Nanogenerator nach Anspruch 1,
wobei die Oberfläche der Reibungsschicht (30), die mit der Flüssigkeit in Kontakt steht, mit einer Mikrostrukturschicht versehen ist, die aus einem von Nanodrähten, Nanoröhren, Nanopartikeln, Nanostäben, Nanoblumen, Nanonuten, Mikronuten, Nanokegeln, Mikrokegeln, Nanokugeln oder Mikrokugelstrukturen oder einer Anordnung der obenstehenden Strukturen hergestellt ist.

3. Triboelektrischer Nanogenerator nach Anspruch 2,
wobei, wenn die Flüssigkeit eine polare Flüssigkeit ist, die Mikrostrukturschicht auf der Oberfläche der Reibungsschicht (30) eine hydrophobe Struktur ist; oder, wenn die Flüssigkeit eine unpolare Flüssigkeit ist, die Mikrostrukturschicht auf der Oberfläche der Reibungsschicht (30) eine hydrophile Struktur ist.

4. Triboelektrischer Nanogenerator nach einem der Ansprüche 1-3,
wobei die erste Elektrodenschicht (21; 210) und die zweite Elektrodenschicht (22; 220) beide in der Form einem langen Streifen gleichen und in einer Längsrichtung parallel auf dem Substrat (10) angeordnet sind.

5. Triboelektrischer Nanogenerator nach Anspruch 4,
wobei ein Verhältnis von Länge zu Breite der ersten Elektrodenschicht (21; 210) und/oder der zweiten Elektrodenschicht (22; 220) 1:l bis 1000:l beträgt.

6. Triboelektrischer Nanogenerator nach Anspruch 4 oder 5,
wobei eine Breite eines Zwischenraums zwischen der ersten Elektrodenschicht (21; 210) und der zweiten Elektrodenschicht (22; 220) 10 nm bis 5 cm beträgt.

7. Triboelektrischer Nanogenerator nach Anspruch 2,
wobei die Reibungsschicht (30) ein Film ist, der eine Dicke von 10 nm bis 2 cm aufweist; und wobei die Mikrostrukturschicht eine Dicke von 2 nm bis 200 µm aufweist.

8. Triboelektrischer Nanogenerator nach einem der Ansprüche 1-7,
wobei die Oberfläche der Reibungsschicht (30), die mit der Flüssigkeit in Kontakt steht, chemisch modifiziert ist, wobei:
ein Vergleich der Materialpolarität zwischen der Reibungsschicht (30) und der Flüssigkeit erfolgt, wobei, wenn die Polarität der Reibungsschicht (30) positiv ist, eine funktionelle Gruppe, die leicht Elektronen abgibt, auf die Oberfläche der Reibungsschicht (30) aufgebracht wird; und, wenn die Polarität der Reibungsschicht (30) negativ ist, eine funktionelle Gruppe, die leicht Elektronen aufnimmt, auf die Oberfläche der Reibungsschicht (30) aufgebracht wird; oder
ein Vergleich der Materialpolarität zwischen der Reibungsschicht (30) und der Flüssigkeit erfolgt, wobei, wenn die Polarität der Reibungsschicht (30) positiv ist, positive Ladungen auf die Oberfläche der Reibungsschicht (30) aufgebracht werden; und, wenn die Polarität der Reibungsschicht (30) negativ ist, negative Ladungen auf die Oberfläche der Reibungsschicht (30) aufgebracht werden.

9. Triboelektrischer Nanogenerator nach einem der Ansprüche 1-8,
wobei das Material der Reibungsschicht (30) eines oder mehrere der folgenden Materialien ist:
Polytetrafluorethylen, Poly(perfluorethylenpropylen) (FEP, Copolymer aus Tetrafluorethylen und Hexafluorpropylen), Polydimethylsiloxan (PDMS), Polyimid, Polydiphenylpropancarbonat,
Polyethylenglykolterephthalat, Anilin-Formaldehyd-Harz, Polyformaldehyd, Ethylcellulose, Polyamid, MelaminFormaldehyd, Polyethylenglykolsuccinat, Cellulose, Celluloseacetat, Polyethylenglykoladipat, Polydiallylphthalat, regenerierter Celluloseschwamm, Polyurethan-Elastomer, Styrol-Propylen-Copolymer, Styrol-Acrylnitril-Copolymer, Styrol-Butadien-Copolymer, Polyamid Nylon 11, Polyamid Nylon 66, Wolle und Wollstoffe davon, Seide und Seidenstoffe davon, Papier, Kunstfaser, Baumwolle und Baumwollstoffe davon, Holz, Hartgummi, Polymethacrylat, Polyvinylalkohol, Polyester, Polyisobutylen, Polyurethan-Elastomer, flexibler Polyurethanschwamm, Polyvinylbutyral, Phenolharz, Chloroprenkautschuk, Butadien-Propylen-Copolymer, Naturkautschuk, Polyacrylnitril, Poly(vinylidenchlorid-co-acrylnitril), Polyethylen-Bisphenol A-Carbonat, Polystyrol, Polymethylmethacrylat, Polycarbonat, Flüssigkristallpolymer, Polychloropren, Polyacrylnitril, Acetat, Polybisphenolcarbonat, Polychlorether, Polytrifluorchlorethylen, Polyvinylidenchlorid, Polyethylen, Polypropylen, Polyvinylchlorid und Parylene, darunter Parylene C, Parylene N, Parylene D, Parylene HT oder Parylene AF4.

10. Triboelektrischer Nanogenerator nach einem der Ansprüche 1-9,
wobei die Flüssigkeit Wasser, vollentsalztes Wasser, Meerwasser, wässrige NaCl-Lösung, Ameisensäure, Methanol, Ethanol, n-Propanol, Isopropanol, n-Butanol, Essigsäure, Dimethylsulfoxid, Dimethylformamid, Acetonitril, Aceton, Hexan, Benzol, Toluol, Diethylether, Chloroform, Ethylacetat, Tetrahydrofuran oder Dichlormethan ist.

11. Triboelektrischer Nanogenerator nach einem der Ansprüche 1-3 und 7-10,
wobei die erste Elektrodenschicht (21; 210) und die zweite Elektrodenschicht (22; 220) der Elektrizitätserzeugungskomponente eine Ineinandereinsetzungsanordnung ausbilden, wobei jede der Elektroden in der Ineinandereinsetzungsanordnung durch paralleles Anordnen mehrerer, langen Streifen gleichender Teilelektroden und Verbinden derselben miteinander an einem Ende davon ausgebildet wird; und wobei zwischen der ersten Elektrodenschicht (21; 210) und der zweiten Elektrodenschicht (22; 220) ein Zwischenraum in der Ineinandereinsetzungsanordnung vorhanden ist und die erste Elektrodenschicht (21; 210) und die zweite Elektrodenschicht (22; 220) abwechselnd angeordnet sind.

12. Triboelektrischer Nanogenerator nach Anspruch 11,
wobei Verhältnisse von Länge zu Breite der langen Streifen gleichenden Teilelektroden 1:1 bis 1000:1 betragen.

13. Triboelektrischer Nanogenerator nach einem der Ansprüche 1-10,
wobei der Generator mehrere Elektrizitätserzeugungskomponenten umfasst und
wobei die mehreren Elektrizitätserzeugungskomponenten nacheinander in einer Fluktuations- oder Fließrichtung der Flüssigkeit angeordnet sind und zwei benachbarte Elektrizitätserzeugungskomponenten sich eine Elektrodenschicht zwischen sich teilen.

14. Triboelektrischer Nanogenerator nach Anspruch 13,
wobei der Generator ferner mehrere Gleichrichtervorrichtungen (A1, A2, A3, A4, A5) umfasst, deren Anzahl die gleiche ist wie diejenige der Elektrizitätserzeugungskomponenten, und
wobei die zwei Elektrodenschichten jeder Elektrizitätserzeugungskomponente mit einer der Gleichrichtervorrichtungen (A1, A2, A3, A4, A5) verbunden sind.

15. Verfahren zum Erzeugen von Elektrizität,
**dadurch gekennzeichnet, dass**
die Elektrizität durch Abgreifen mechanischer Energie von Flüssigkeit mittels eines triboelektrischen Nanogenerators nach einem der Ansprüche 1-14 erzeugt wird, wobei die fluktuierende oder fließende Flüssigkeit und die Reibungsschicht (30) des Generators derart aneinander reiben, dass die Oberfläche der Reibungsschicht (30) Ladungen trägt, und
wobei die Ladungen auf der Oberfläche der Reibungsschicht (30), die den zwei Elektrodenschichten der Elektrizitätserzeugungskomponente entspricht, nacheinander durch Ionen in der Flüssigkeit abgeschirmt werden, wenn die Flüssigkeit fluktuiert oder fließt, was bewirkt, dass die elektrostatischen Wirkungen der auf der Oberfläche der Reibungsschicht (30) getragenen Ladungen auf die Elektronen in der ersten Elektrodenschicht (21; 210) anders sind als diejenigen auf die Elektronen in der zweiten Elektrodenschicht (22; 220), was einen Fluss von Ladungen zwischen der ersten Elektrodenschicht (21; 210) und der zweiten Elektrodenschicht (22; 220) durch eine äußere Schaltung zum Ergebnis hat.

## Revendications

1. Nanogénérateur triboélectrique qui collecte de l'énergie mécanique d'un liquide, comprenant :
un substrat isolant (10) ;
un composant de production d'électricité qui est constitué d'une première couche d'électrode (21 ; 210) et d'une seconde couche d'électrode (22 ; 220), la première couche d'électrode (21 ; 210) et la seconde couche d'électrode (22 ; 220) étant disposées séparément sur le substrat (10) et électriquement connectées l'une à l'autre ; et
une couche de frottement (30) qui recouvre le composant de production d'électricité de façon telle que la première couche d'électrode (21 ; 210) et la seconde couche d'électrode (22 ; 220) du composant de production d'électricité sont isolées du liquide,
**caractérisé en ce que**,
le nanogénérateur triboélectrique comprend en outre le liquide ; et le liquide frotte sur la couche de frottement (30) lorsque le liquide oscille ou circule, de façon telle qu'une surface de la couche de frottement (30) en contact avec le liquide porte des charges, et
dans lequel les charges sur la surface de la couche de frottement (30) correspondant aux deux couches d'électrode sont séquentiellement masquées par des ions présents dans le liquide alors que le liquide oscille ou circule, ce qui amène les effets électrostatiques des charges portées sur la surface de la couche de frottement (30) sur les électrons dans la première couche d'électrode (21 ; 210) à être différents de ceux sur les électrons dans la seconde couche d'électrode (22 ; 220), ce qui résulte en une circulation de charges induites entre la première couche d'électrode (21 ; 210) et la seconde couche d'électrode (22 ; 220).

2. Nanogénérateur triboélectrique selon la revendication 1,
dans lequel la surface de la couche de frottement (30) en contact avec le liquide est pourvue d'une couche de microstructure qui est formée à partir de l'un quelconque de nanofils, de nanotubes, de nanoparticules, de nanobâtonnets, de nanofleurs, de nanorainures, de rainures micrométriques, de nanocônes, de cônes micrométriques, de nanosphères ou d'une structure sphérique micrométrique ou d'un ensemble des structures ci-dessus.

3. Nanogénérateur triboélectrique selon la revendication 2,
dans lequel lorsque le liquide est un liquide polaire, la couche de microstructure sur la surface de la couche de frottement (30) est une structure hydrophobe ; ou lorsque le liquide est un liquide non polaire, la couche de microstructure sur la surface de la couche de frottement (30) est une structure hydrophile.

4. Nanogénérateur triboélectrique selon l'une quelconque des revendications 1-3,
dans lequel la première couche d'électrode (21 ; 210) et la seconde couche d'électrode (22 ; 220) ont toutes deux une forme de type longue bandelette et sont agencées en parallèle sur le substrat (10) dans une direction de longueur.

5. Nanogénérateur triboélectrique selon la revendication 4,
dans lequel un rapport de la longueur à la largeur de la première couche d'électrode (21 ; 210) et/ou de la seconde couche d'électrode (22 ; 220) est de 1:1 à 1000:1.

6. Nanogénérateur triboélectrique selon la revendication 4 ou 5,
dans lequel une largueur d'un intervalle entre la première couche d'électrode (21 ; 210) et la seconde couche d'électrode (22 ; 220) est de 10 nm à 5 cm.

7. Nanogénérateur triboélectrique selon la revendication 2,
dans lequel la couche de frottement (30) est un film qui a une épaisseur de 10 nm à 2 cm ; et dans lequel la couche de microstructure a une épaisseur de 2 nm à 200 µm.

8. Nanogénérateur triboélectrique selon l'une quelconque des revendications 1-7,
dans lequel la surface de la couche de frottement (30) en contact avec le liquide est chimiquement modifiée :
si on compare la polarité des matériaux entre la couche de frottement (30) et le liquide, si la polarité de la couche de frottement (30) est positive, un groupe fonctionnel qui est susceptible de donner des électrons étant introduit sur la surface de la couche de frottement (30) ; et si la polarité de la couche de frottement (30) est négative, un groupe fonctionnel qui est susceptible d'accepter des électrons étant introduit sur la surface de la couche de frottement (30) ; ou
si on compare la polarité des matériaux entre la couche de frottement (30) et le liquide, si la polarité de la couche de frottement (30) est positive, des charges positives étant introduites sur la surface de la couche de frottement (30) ; et si la polarité de la couche de frottement (30) est négative, des charges négatives étant introduites sur la surface de la couche de frottement (30) .

9. Nanogénérateur triboélectrique selon l'une quelconque des revendications 1-8,
dans lequel le matériau de la couche de frottement (30) est un ou plusieurs des matériaux suivants : du polytétrafluoroéthylène, du poly(perfluoroéthylènepropylène) (FEP, copolymère de tétrafluoroéthylène et d'hexafluoropropylène), du polydiméthylsiloxane (PDMS), du polyimide, du poly(carbonate de bisphénol A), du poly(téréphtalate d'éthylèneglycol), de la résine d'aniline-formaldéhyde, du polyformaldéhyde, de l'éthylcellulose, du polyamide, de la résine de mélamine-formaldéhyde, du poly(succinate d'éthylèneglycol), de la cellulose, de l'acétate de cellulose, du poly(adipate d'éthylèneglycol), du poly(phtalate de diallyle), de l'éponge de cellulose régénérée, de l'élastomère de polyuréthane, du copolymère de styrène-propylène, du copolymère de styrène-acrylonitrile, du copolymère de styrène-butadiène, du polyamide nylon 11, du polyamide nylon 66, de la laine et des tissus de celle-ci, de la soie et des tissus de celle-ci, du papier, de la fibre artificielle, du coton et des tissus de celui-ci, du bois, du caoutchouc dur, du polyméthacrylate, du poly(alcool vinylique), du polyester, du polyisobutylène, de l'élastomère de polyuréthane, de l'éponge souple de polyuréthane, du poly(butyral de vinyle), de la résine phénolique, du caoutchouc chloroprène, du copolymère de butadiène-propylène, du caoutchouc naturel, du polyacrylonitrile, du poly(chlorure de vinylidène-co-acrylonitrile), du poly(éthylène-carbonate de bisphénol A), du polystyrène, du poly(méthacrylate de méthyle), du polycarbonate, du polymère à cristaux liquides, du polychloroprène, du polyacrylonitrile, de l'acétate, du poly(carbonate de bisphénol), du polychloroéther, du polytrifluorochloroéthylène, du poly(chlorure de vinylidène), du polyéthylène, du polypropylène, du poly(chlorure de vinyle) et du parylène, notamment du parylène C, du parylène N, du parylène D, du parylène HT ou du parylène AF4.

10. Nanogénérateur triboélectrique selon l'une quelconque des revendications 1-9,
dans lequel le liquide est de l'eau, de l'eau désionisée, de l'eau de mer, de la solution aqueuse de NaCl, de l'acide formique, du méthanol, de l'éthanol, du n-propanol, de l'isopropanol, du n-butanol, de l'acide acétique, du diméthylsulfoxyde, du diméthylformamide, de l'acétonitrile, de l'acétone, de l'hexane, du benzène, du toluène, de l'oxyde de diéthyle, du chloroforme, de l'acétate d'éthyle, du tétrahydrofurane ou du dichlorométhane.

11. Nanogénérateur triboélectrique selon l'une quelconque des revendications 1-3 et 7-10,
dans lequel la première couche d'électrode (21 ; 210) et la seconde couche d'électrode (22 ; 220) du composant de production d'électricité forment un agencement d'emboîtement, chacune des électrodes de l'agencement d'emboîtement étant formée par agencement d'une pluralité de sous-électrodes de type longue bandelette en parallèle et connexion de celles-ci les unes aux autres à une extrémité de celles-ci ; et
dans lequel il y a un intervalle entre la première couche d'électrode (21 ; 210) et la seconde couche d'électrode (22 ; 220) dans l'agencement d'emboîtement et la première couche d'électrode (21 ; 210) et la seconde couche d'électrode (22 ; 220) sont agencées en alternance.

12. Nanogénérateur triboélectrique selon la revendication 11,
dans lequel les rapports de la longueur à la largeur des sous-électrodes de type longue bandelette sont de 1:1 à 1000:1.

13. Nanogénérateur triboélectrique selon l'une quelconque des revendications 1-10,
dans lequel le générateur comprend une pluralité de composants de production d'électricité et
dans lequel la pluralité de composants de production d'électricité sont agencés séquentiellement dans une direction d'oscillation ou de circulation du liquide et deux composants de production d'électricité adjacents ont une couche d'électrode en commun entre eux.

14. Nanogénérateur triboélectrique selon la revendication 13,
dans lequel le générateur comprend en outre une pluralité de dispositifs de redressement (A1, A2, A3, A4, A5) dont le nombre est le même que celui des composants de production d'électricité et
dans lequel les deux couches d'électrode de chaque composant de production d'électricité sont connectées à l'un des dispositifs de redressement (A1, A2, A3, A4, A5).

15. Procédé de production d'électricité,
**caractérisé en ce que**,
l'électricité est produite par collecte d'énergie mécanique d'un liquide au moyen d'un nanogénérateur triboélectrique selon l'une quelconque des revendications 1-14,
dans lequel le liquide oscillant ou circulant et la couche de frottement (30) du générateur frottent l'un sur l'autre de façon telle que la surface de la couche de frottement (30) porte des charges et
dans lequel les charges sur la surface de la couche de frottement (30) correspondant aux deux couches d'électrode du composant de production d'électricité sont successivement masquées par des ions présents dans le liquide alors que le liquide oscille ou circule, ce qui amène les effets électrostatiques des charges portées sur la surface de la couche de frottement (30) sur les électrons dans la première couche d'électrode (21 ; 210) à être différents de ceux sur les électrons dans la seconde couche d'électrode (22 ; 220), ce qui résulte en une circulation de charges entre la première couche d'électrode (21 ; 210) et la seconde couche d'électrode (22 ; 220) en passant par un circuit externe.
